(19) Europäisches Patentamt
European Patent Office
Office européen des brevets

(11)  **EP 3 992 356 B1**

(12)  **EUROPEAN PATENT SPECIFICATION**

(45) Date of publication and mention
of the grant of the patent:
**08.05.2024  Bulletin 2024/19**

(21) Application number: **21165214.4**

(22) Date of filing: **26.03.2021**

(51) International Patent Classification (IPC):
**D06H 1/00** *(2006.01)*     **D06H 3/08** *(2006.01)*
**G01N 21/00** *(2006.01)*    **G01N 21/84** *(2006.01)*

(52) Cooperative Patent Classification (CPC):
**D06H 3/08; D06H 1/00; G06V 10/50**

(54) **METHOD FOR VERIFYING PRODUCT AUTHENTICITY AND ESTABLISHING AUTHORIZED PRODUCT DATA WITH FABRIC FEATURES**

VERFAHREN ZUR VERIFIZIERUNG DER AUTHENTIZITÄT UND ZUR ERSTELLUNG VON AUTORISIERTEN PRODUKTDATEN MIT GEWEBEMERKMALEN

PROCÉDÉ POUR VÉRIFIER L'AUTHENTICITÉ D'UN PRODUIT ET ÉTABLIR DES DONNÉES AUTORISÉES SUR LE PRODUIT AVEC DES CARACTÉRISTIQUES DE TISSU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2020  TW 109137426**

(43) Date of publication of application:
**04.05.2022  Bulletin 2022/18**

(73) Proprietors:
• **Heng Sheng Investment Ltd.**
**Tortola (VG)**
• **Taiwan Fintech Corporation**
**Taipei City 110, Taiwan (R.O.C.) (TW)**

(72) Inventors:
• **LIAO, Chih-Wen**
**Taipei 106, Taiwan, R.O.C. (TW)**
• **WU, Chu**
**Taipei 106, Taiwan, R.O.C. (TW)**

• **LIN, Yuh-Jiun**
**Taipei 106, Taiwan, R.O.C. (TW)**
• **TSAI, Chi-Hang**
**Taipei 106, Taiwan, R.O.C. (TW)**
• **LEE, Han-Chao**
**Taipei 106, Taiwan, R.O.C. (TW)**
• **WANG, Ko-Yang**
**Taipei 106, Taiwan, R.O.C. (TW)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**CN-A- 102 982 724      CN-A- 104 281 954**
**CN-A- 111 695 657      JP-A- 2007 092 254**
**KR-B1- 102 154 484      US-A- 6 086 966**
**US-A1- 2017 204 543**

**Description**

## FIELD OF THE INVENTION

The invention relates to a method for verifying product authenticity and establishing authorized product data, and more particularly to a method for verifying a product authenticity and establishing an authorized product data with fabric features.

## BACKGROUND OF THE INVENTION

There are many counterfeit products on the market, so brands of various fabrics have developed methods to add anti-counterfeit identification label or logo on fabrics in order to provide consumers with the ability to verify the authenticity of the fabric products they want to buy.

Existing fabrics mostly attach an anti-counterfeiting tag additionally or add an anti-counterfeiting label or logo on the fabric tag. The anti-counterfeiting tag and the anti-counterfeiting label or logo are provided with anti-counterfeiting bar code or laser stamp thereon to achieve an object of anti-counterfeiting. However, conventional anti-counterfeiting tag or anti-counterfeiting label may still be attached on counterfeit products stealthily by unscrupulous manufacturers, which will cause confusion of the genuine product with the counterfeit. Furthermore, since the conventional anti-counterfeiting tag or anti-counterfeiting label is additionally added, it is still possible for the unscrupulous manufacturers to imitate the fabric and then attach recycled or forged anti-counterfeiting tag or anti-counterfeiting label, causing a large quantity of unauthorized fabrics to circulate in the market, and damaging the goodwill of brand owners.

On the other hand, the current method of authenticity identification of fabrics may also be determined by the stitches and textures of the fabric. If a quantity of genuine products provided by the fabric manufacturer exceeds an authorized quantity during the production process, since the stitches and textures of the aforementioned unauthorized fabrics are the same as those of the authorized products, the company will obtain erroneous authentication results when authenticating the unauthorized fabrics. US 20170204543A1 discloses a fabric including a plurality of open stitches and a plurality of closed stitches that cooperatively define a data-bearing section. The data-bearing section contains coded information associated with the fabric. In defining the data-bearing section, each of the open stitches and each of the closed stitches are employed to respectively represent specific symbols of an encoding system. Each of the open stitches and the closed stitches is recognizable from a captured image of the data-bearing section based on image recognition technology. The coded information is extractable by identifying relative locations of the open stitches and the closed stitches in the data-bearing section, and applying the encoding system.

## SUMMARY OF THE INVENTION

A main object of the invention is to solve the problem that the conventional anti-counterfeiting techniques are easy to be copied, causing the authenticity of a product to be incapable of being verified correctly.

A secondary object of the invention is to solve the problem that a quantity of genuine fabrics provided by manufacturers may exceed an authorized quantity, making it difficult to identify between authorized products and unauthorized fabrics.

In order to achieve the above objects, the invention provides a method according to claim 1 for verifying a product authenticity with fabric features, implemented by an electronic device, and the method includes a step of receiving at least one fabric partial image and performing image analysis on the at least one fabric partial image to determine a fabric body comprising at least one first yarn loop and an anti-counterfeiting feature composed of a plurality of second yarn loops, and analyzing an image optical feature distribution information from a part of the anti-counterfeiting feature after the anti-counterfeiting feature is determined, wherein the image optical feature distribution information is randomly generated based on at least two sub-yarns, and the at least two sub-yarns compose the plurality of second yarn loops and are different in colour based on a natural colour system (NCS), wherein the method is characterized in further including steps of:

receiving a fabric serial number generated by operation of an input device; and
retrieving the fabric serial number or the image optical feature distribution information to find a authorized product data correlated therewith, the authorized product data including an authorized product serial number and an anti-counterfeiting feature information of an authorized product, which are provided to comparing with the fabric serial number and the image optical feature distribution information; wherein providing an authorized product prompt information if the authorized product serial number and the anti-counterfeiting feature information of the authorized product are matched with the fabric serial number and the image optical feature distribution information; and wherein providing a counterfeit prompt information if the authorized product serial number and the anti-counterfeiting feature information of the authorized product are not matched with the fabric serial number and the image optical feature distribution information.

In one embodiment, the method further comprises photographing a fabric waiting verifying by a camera device to generate the at least one fabric partial image.

In one embodiment, the method further comprise receiving the at least one fabric partial image obtained from the fabric waiting verified, and inducting the anti-counterfeiting feature in the at least one fabric partial image via an image similarity analysis.

In one embodiment, the method further comprises obtaining at least two partial feature colour distribution information from the authorized product data, analyzing colour of the image optical feature distribution information to generate at least two feature colour distribution information which are the same as or similar to the at least two partial feature colour distribution information, respectively, and comparing each feature colour distribution information with the partial feature colour distribution information correlated thereto.

In one embodiment, the authorized product data is stored in a cloud server.

In one embodiment, the cloud server is implemented by blockchain storage.

In one embodiment, the anti-counterfeiting feature information of the authorized product includes a planar image optical feature distribution information and a three-dimensional image optical feature distribution information, and the method further comprises receiving a plurality of fabric partial images obtained from the fabric waiting verifying, retrieving the image optical feature distribution information from the anti-counterfeiting feature in the plurality of fabric partial images, and sampling a three-dimensional image optical feature distribution information to be verified for comparing with the three-dimensional image optical feature distribution information.

In one embodiment, the authorized product prompt information includes at least one of a product information, a brand manufacturer, a manufacturing country, a first point-of-sale, a location of an anti-counterfeiting feature, a fabric image of the anti-counterfeiting feature, and the authorized product serial number.

In addition to the foregoing, the invention further provides a method according to claim 9 for establishing an authorized product data with fabric features, including a step of generating at least one fabric image to be analyzed by photographing a part of a fabric with an anti-counterfeiting feature, wherein the fabric comprises a fabric body comprising at least one first yarn loop and the anti-counterfeiting feature composed of a plurality of second yarn loops, and image optical features of the at least one first yarn loop are different from image optical features of the plurality of second yarn loops, wherein the method is characterized in further including steps of:

performing image analysis on the second yarn loops in the at least one fabric image to generate an image optical distribution feature, wherein the image optical distribution feature is randomly generated by at least two sub-yarns, and the at least two sub-yarns compose the plurality of second yarn loops and are different in colour based on a natural colour system (NCS); and

recording the image optical distribution feature as an anti-counterfeiting feature information of an authorized product, and storing the anti-counterfeiting feature information in correlation with an authorized product serial number to generate an authorized product data.

In one embodiment, the at least two sub-yarns belong to a same colour hue in the natural colour system and are separated by at least three colour levels apart.

In one embodiment, colours of the at least two sub-yarns exclude absolute white, absolute black, or gray mixed with absolute white and absolute black in proportion.

In one embodiment, the at least two sub-yarns are made to be prevented from generating a large amount of reflection light during the step of generating at least one fabric image.

In one embodiment, the authorized product serial number is defined by a brand owner.

In one embodiment, the authorized product data includes a first point-of-sale data, and the first point-of-sale data is generated after the fabric is first sold at a sales location.

In one embodiment, the method further comprises photographing a part of the fabric with the anti-counterfeiting feature to generate a plurality of fabric images waiting verifying in different angles, sampling the plurality of fabric images waiting verifying to generate a planar image optical feature distribution information and a three-dimensional image optical feature distribution information, and recording the planar image optical feature distribution information and the three-dimensional image optical feature distribution information in the anti-counterfeiting feature information.

In one embodiment, the method further comprises analyzing colour of the image optical distribution feature to generate at least two partial feature colour distribution information, and recording the at least two partial feature colour distribution information in the authorized product data.

According to the foregoing implementation of the invention, compared with the prior art, the invention has the following features: the anti-counterfeiting feature is directly formed with on the fabric, so when verifying the authenticity of a product, the invention determines whether the fabric is an authorized product based on the image optical feature distribution information randomly generated by the at least two sub-yarns and the fabric serial number. In addition, when the invention establishes the authorized product data, since the fabric body is simultaneously generated with the anti-counterfeiting feature during a weaving process of the fabric, when the authorized fabrics with a quantity exceeding a quantity of genuine products circulate on the market, the brand owner would not provide the fabric serial numbers for the fabrics, so that subsequent users can identify whether the fabrics are authorized by the brand owner.

## BRIEF DESCRIPTION OF THE DRAWINGS

The patent or application file contains at least one drawing executed in color. Copies of this patent or patent application publication with color drawing(s) will be provided by the Office upon request and payment of the necessary fee.

FIG. 1 is a flowchart of a first embodiment of a method for verifying a product authenticity with fabric features according to the invention;
FIG. 2 is a schematic diagram of a fabric of the first embodiment of the method for verifying a product authenticity with the fabric features according to the invention;
FIG. 3 is a block diagram of an electronic device of the first embodiment of the method for verifying a product authenticity with the fabric features according to the invention;
FIG. 4 is a flowchart of a second embodiment of the method for verifying a product authenticity with the fabric features according to the invention;
FIG. 5 is a flowchart of a third embodiment of the method for verifying a product authenticity with the fabric features according to the invention;
FIG. 6 is a flowchart of a fourth embodiment of the method for verifying a product authenticity with the fabric features according to the invention;
FIG. 7 is a schematic diagram of a fabric image to be analyzed according to an embodiment of the invention;
FIG. 8 is a schematic diagram of an image optical feature distribution information of an authorized product according to an embodiment of the invention;
FIG. 9 is a first schematic diagram of a partial feature colour distribution information according to an embodiment of the invention;
FIG. 10 is a second schematic diagram of the partial feature colour distribution information according to an embodiment of the invention;
FIG. 11 is a schematic diagram of a partial image of a fabric according to an embodiment of the invention;
FIG. 12 is a schematic diagram of the image optical feature distribution information according to an embodiment of the invention;
FIG. 13 is a first schematic diagram of a feature colour distribution information according to an embodiment of the invention;
FIG. 14 is a second schematic diagram of the feature colour distribution information according to an embodiment of the invention;
FIG. 15 is a first schematic diagram of a distribution difference information according to an embodiment of the invention;
FIG. 16 is a second schematic diagram of the distribution difference information according to an embodiment of the invention;
FIG. 17 is a schematic diagram of the fabric image to be analyzed according to another embodiment of the invention;
FIG. 18 is a schematic diagram of an image optical feature distribution information of an authorized product according to another embodiment of the invention;
FIG. 19 is a first schematic diagram of a partial feature colour distribution information according to another embodiment of the invention;
FIG. 20 is a second schematic diagram of the partial feature colour distribution information according to another embodiment of the invention;
FIG. 21 is a schematic diagram of a partial image of a fabric according to another embodiment of the invention;
FIG. 22 is a schematic diagram of the image optical feature distribution information according to another embodiment of the invention;
FIG. 23 is a first schematic diagram of the feature colour distribution information according to another embodiment of the invention;
FIG. 24 is a second schematic diagram of the feature colour distribution information according to another embodiment of the invention;
FIG. 25 is a first schematic diagram of the distribution difference information according to another embodiment of the invention;

FIG. 26 is a second schematic diagram of the distribution difference information according to another embodiment of the invention;

FIG. 27 is a schematic diagram of steps of a fifth embodiment of the method for verifying a product authenticity with the fabric features according to the invention;

FIG. 28 is a schematic diagram of steps of a first embodiment of a method for establishing an authorized product data with fabric features according to the invention;

FIG. 29 is a schematic diagram of steps of a second embodiment of the method for establishing the authorized product data with the fabric features according to the invention; and

FIG. 30 is a schematic diagram of steps of a third embodiment of the method for establishing the authorized product data with the fabric features according to the invention.

## DETAILED DESCRIPTION OF THE PREFERRED EMBODIMENTS

The detailed description and technical content of the invention are described below with reference to the drawings.

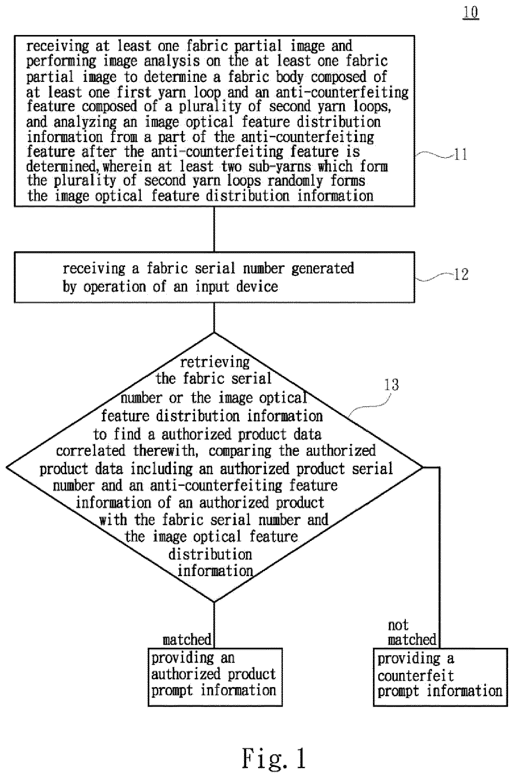

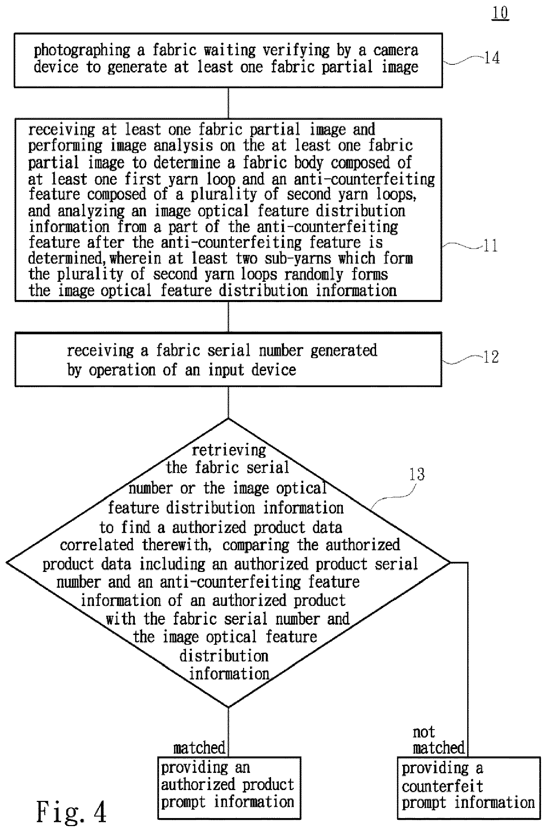

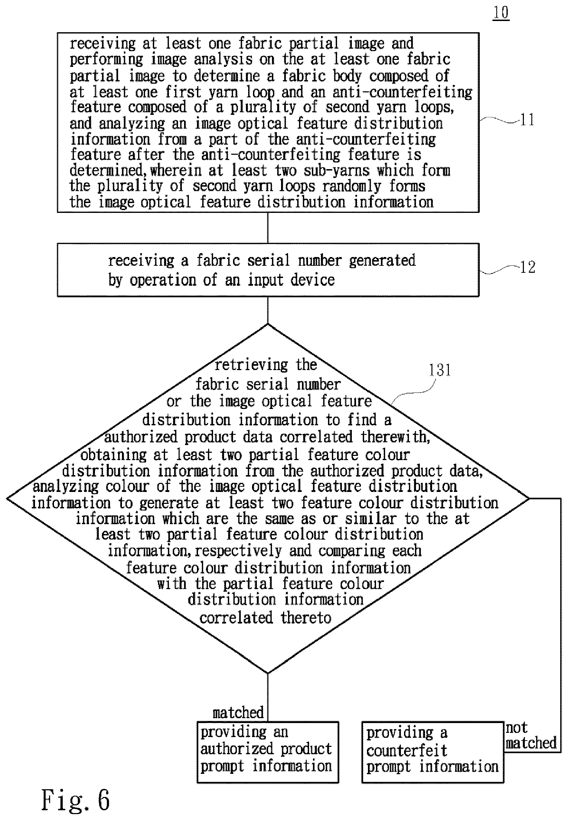

Please refer to FIG. 1, FIG. 2, FIG. 3, FIG. 4, FIG. 5, and FIG. 6, the invention provides a method 10 for verifying a product authenticity with fabric features. The method 10 is implemented by an electronic device 20 to determine an authenticity of a fabric 30. Before describing the method 10 of the invention, the fabric 30 of the invention will be described first. The fabric 30 comprises a fabric body 31 comprising at least one first yarn loop 311, and an anti-counterfeiting feature 32 composed of a plurality of second yarn loops 321, wherein the fabric body 31 is connected to the anti-counterfeiting feature 32, that is, the anti-counterfeiting feature 32 of the invention is directly formed on the fabric 30 instead of being connected to the fabric 30 by an additional structure such as a conventional tag. Furthermore, image optical features of the fabric body 31 and the anti-counterfeiting feature 32 are not close to each other, that is, a color of the first yarn loop 311 is not close to a colour of the second yarn loops 321. In an embodiment, the first yarn loop 311 and the second yarn loops 321 belong to different colour hues in an Natural Colour System (NCS), and a colour hue angle greater than or equal to 30 degrees is formed between the two colour hues. For example, if the first yarn loop 311 is selected to be in Y10R hue, the selection of colour hues for the second yarn loops 321 is excluded from the colour hue angle between Y10R and Y50R, or the colour hue angle between Y10R and G70Y. In addition, if the first yarn loop 311 and the second yarn loops 321 belong to a same colour hue in the NCS, the first yarn loop 311 and the second yarn loops 321 need to be separated by at least three colour levels. In an example that the first yarn loop 311 and the second yarn loops 321 belong to Y90R hue, if a colour level of the first yarn loop 311 is selected to be in S1050 colour level of an NCS colour triangle defined by an NCS colour circle, a colour level of the second yarn loops 321 can be in S1020 colour level or S6030 colour level. That is, a colour code of the first yarn loop 311 is S1050-Y90R, and a colour code of the second yarn loop 321 is S1020-Y90R or S6030-Y90R.

Further, the method 10 for verifying a product authenticity with the fabric features includes following steps of:

step 11: receiving at least one fabric partial image 201 and performing image analysis on the at least one fabric partial image 201 to determine a fabric body 31 comprising at least one first yarn loop 311 and an anti-counterfeiting feature 32 composed of a plurality of second yarn loops 321, and analyzing an image optical feature distribution information 211 from a part of the anti-counterfeiting feature 32 after the anti-counterfeiting feature 32 is determined, wherein at least two sub-yarns 322, 323 which form the plurality of second yarn loops 321 randomly forms the image optical feature distribution information 211 and the at least two sub-yarns 322, 323 comprise image optical features not close to each other, respectively;

step 12: receiving a fabric serial number 221 generated by operation of an input device 22; and

step 13: retrieving the fabric serial number 221 or the image optical feature distribution information 211 to find a authorized product data 212 correlated therewith, the authorized product data 212 including an authorized product serial number 213 and an anti-counterfeiting feature information 214 of the authorized product, which are provided to comparing with the fabric serial number 221 and the image optical feature distribution information 211; wherein providing an authorized product prompt information if the authorized product serial number 213 and the anti-counterfeiting feature information 214 of the authorized product are matched with the fabric serial number 221 and the image optical feature distribution information 211; and wherein providing a counterfeit prompt information if the authorized product serial number 213 and the anti-counterfeiting feature information 214 of the authorized product are not matched with the fabric serial number 221 and the image optical feature distribution information 211.

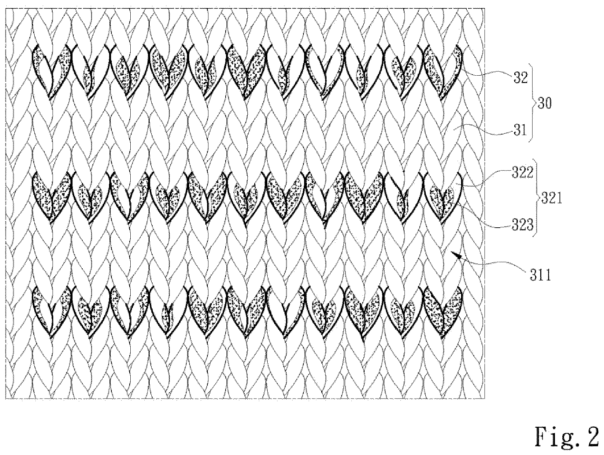

The method 10 is specifically described as follows. In step 11, an arithmetic module 21 of the electronic device 20 receives the at least one fabric partial image 201 of the fabric 30, and performs an image analysis on the at least one fabric partial image 201. In an embodiment, the arithmetic module 21 analyzes a colour distribution of the at least one fabric partial image 201, patterns of the anti-counterfeiting feature 32, or differences of special wavelength light-absorption properties between the fabric body 31 and the anti-counterfeiting feature 32 to determine and distinguish between the fabric body 31 and the anti-counterfeiting feature 32. And the arithmetic module 21 analyzes the image optical feature distribution information 211 from a part of the anti-counterfeiting feature 32 after the anti-counterfeiting feature 32 is determined. In addition, the image optical feature distribution information 211 is randomly generated based on the two sub-yarns 322, 323 composing the second yarn loop 321, and the image optical feature distribution information 211 provides colour distribution on one side surface of the second yarn loop 321 revealed by the two sub-yarns 322, 323. In an embodiment shown in FIG. 2, dotted pattern in the figure represents a colour of one of the two sub-yarns 323(322), and blank represents a colour of the other one of the two sub-yarns 322(323). One of the two sub-yarns 322(323) is mainly distributed at an outer edge of the second yarn loop 321, and the other one of the two sub-yarns 323(322) is mainly distributed at an inner edge of the second yarn loop 321. The two sub-yarns 322, 323 respectively occupy 50% of a surface of the second yarn loop 321. Accordingly, the image optical feature distribution information 211 includes distribution locations and distribution area sizes of the two sub-yarns 322, 323.

Afterwards, proceed to step 12 to receive the fabric serial number 221 generated by operation of the input device 22, wherein the input device 22 is defined according to types of the electronic device 20. For example, if the electronic device 20 is a notebook computer, the input device 22 is a keyboard of the notebook computer; or if the electronic device 20 is a smart phone, the input device 22 is a touch screen of the smart phone. Then, proceed to step 13, the arithmetic module 21 retrieves an authorized product data 212 correlating with the fabric serial number 221 or the image optical feature distribution information 211, compares the fabric serial number 221 with the authorized product serial number 213 recorded in the authorized product data 212, and also compares the image optical feature distribution information 211 with the anti-counterfeiting feature information 214 correlated with the authorized product serial number 213. If the comparison result matches, the arithmetic module 21 generates the authorized product prompt information 215 transmitting to a display module 24. If the comparison result does not match, the arithmetic module 21 generates the counterfeit prompt information 216 transmitting to the display module 24. The display module 24 depicted in the drawings herein can be a display screen of the electronic device 20, or a display device externally connected to the electronic device 20. In addition, the authorized product prompt information 215 and the counterfeit prompt information 216 described herein can be a prompt sound, a prompt pattern, or a text information, respectively. In one embodiment, the authorized product prompt information 215 includes at least one of a product information, a brand manufacturer, a manufacturing country, a first point-of-sale, a location of the anti-counterfeiting feature 32, a fabric image of the anti-counterfeiting feature 32, and the authorized product serial number 213. The product information refers to product-related information of the fabric 30 that is authorized to be manufactured and sold. For example, the product information includes an article number or a batch number of the fabric 30.

The invention directly forms the anti-counterfeiting feature 32 on the fabric and determines an authenticity of the fabric 30 through random colour changes on a side surface of the second yarn loop 321, instead of conventionally attaching additional anti-counterfeiting tags or pasting anti-counterfeiting labels thereon. Therefore, the invention is able to eradicate the fabric 30 imitated by unscrupulous manufacturers, and also prevent the manufacturers from providing an unauthorized amount of the fabric 30 exceeding an authorized quantity into the market during a production process.

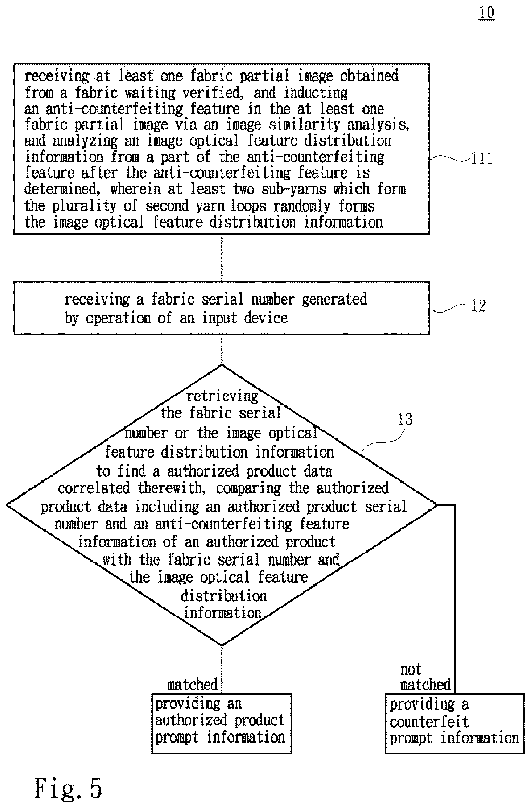

In one embodiment, please refer to FIG.1, FIG.2, FIG.3, and FIG.4. The electronic device 20 further includes a camera device 23 connected to the arithmetic module 21. The method 10 further includes step 14: photographing a fabric waiting verifying by the camera device 23 to generate the at least one fabric partial image 201. In another embodiment, please refer to FIG. 5. Step 11 of the method 10 further includes a sub-step 111: receiving the at least one fabric partial image 201 obtained from the fabric waiting verifying, and inducting the anti-counterfeiting feature 32 in the at least one fabric partial image 201 via an image similarity analysis. Specifically, the arithmetic module 21 performs similarity statistics on samples captured from the fabric waiting verifying. If a difference of the samples is approximate, the samples are determined as the fabric body 31; if the difference of the samples is not approximate, the samples are determined that containing the fabric body 31 and the anti-counterfeiting feature 32 together.

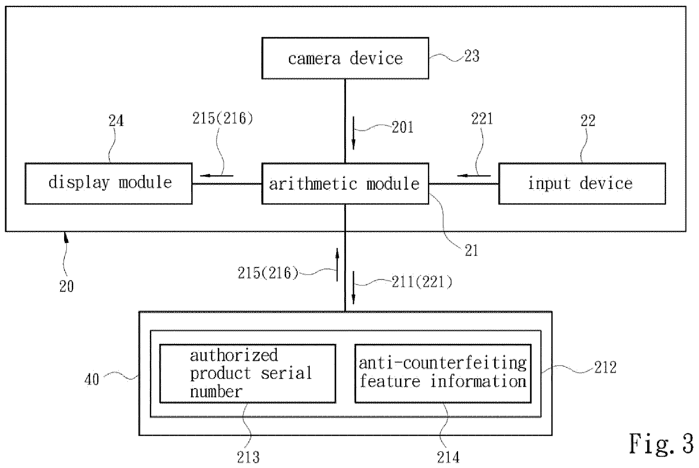

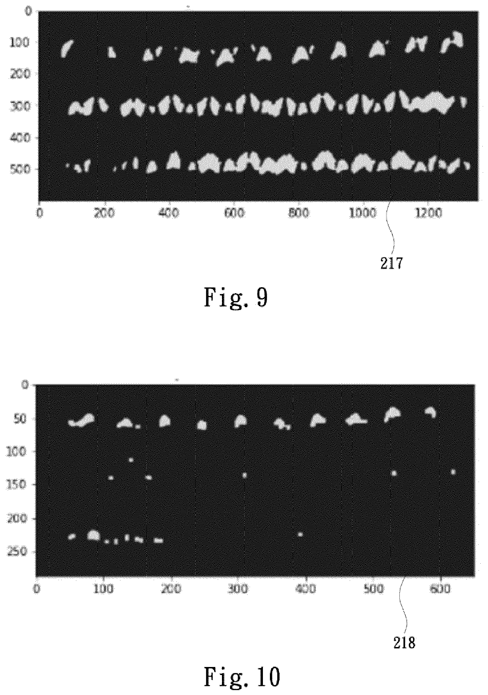

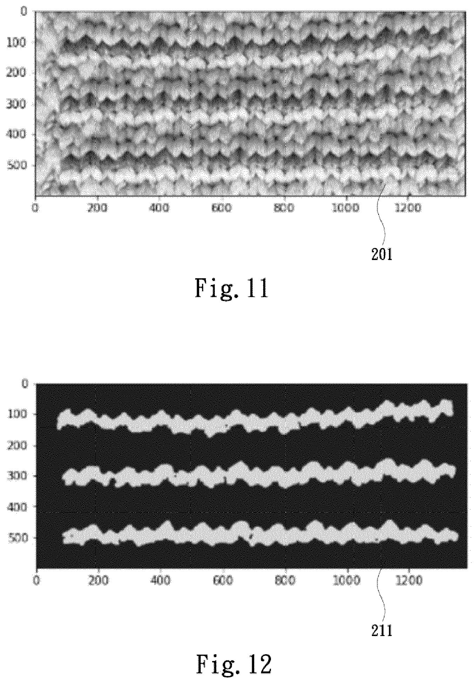

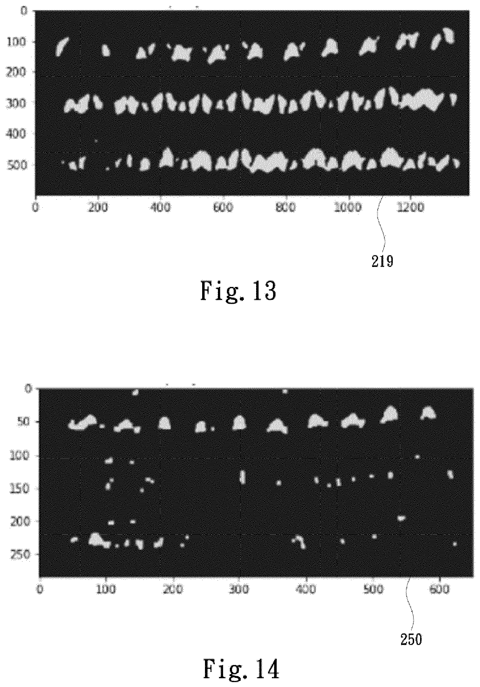

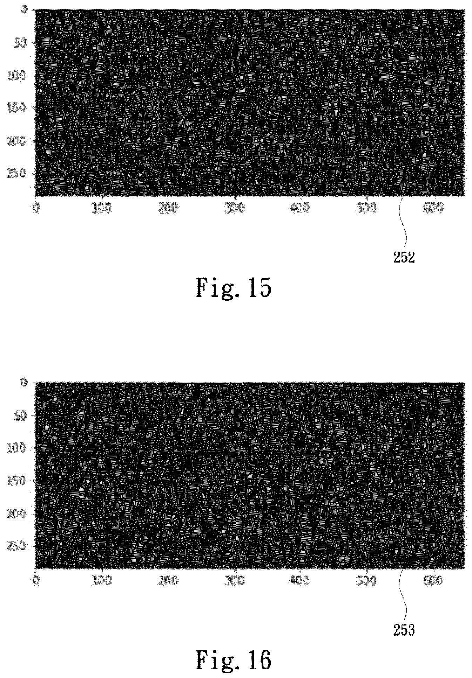

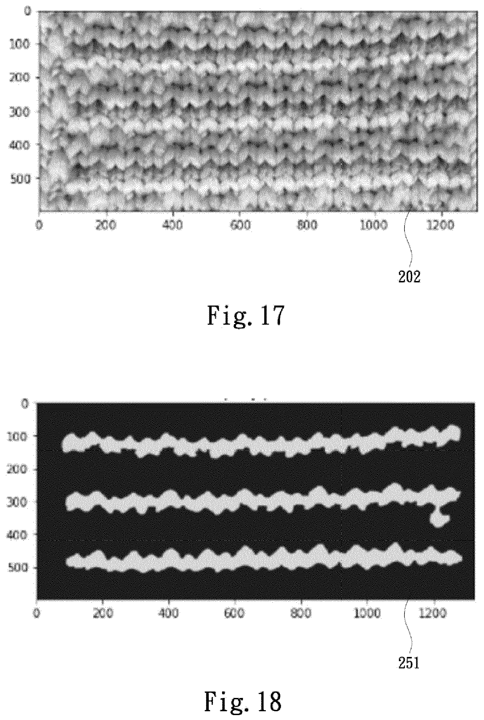

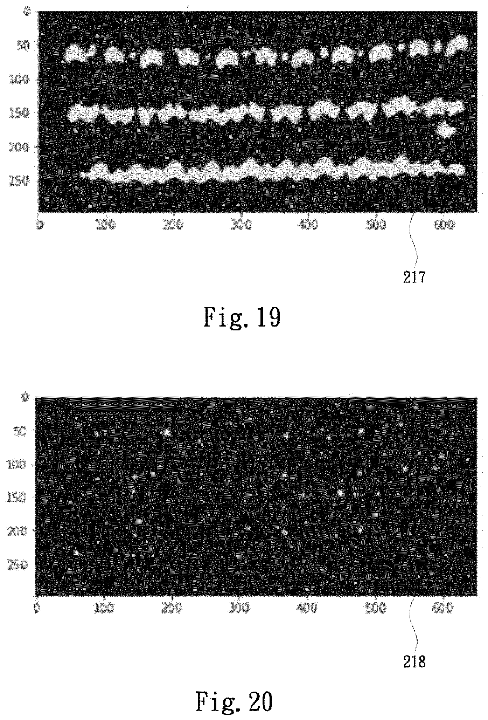

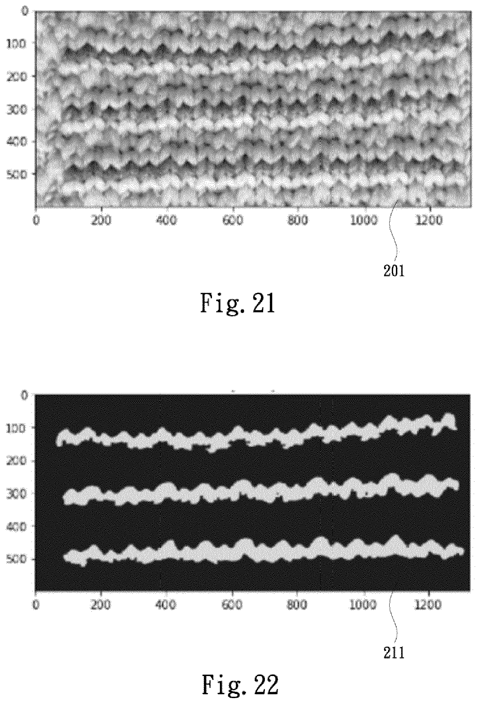

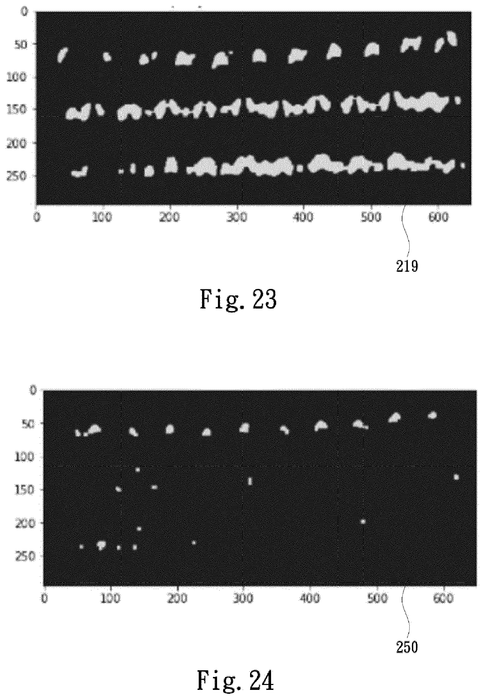

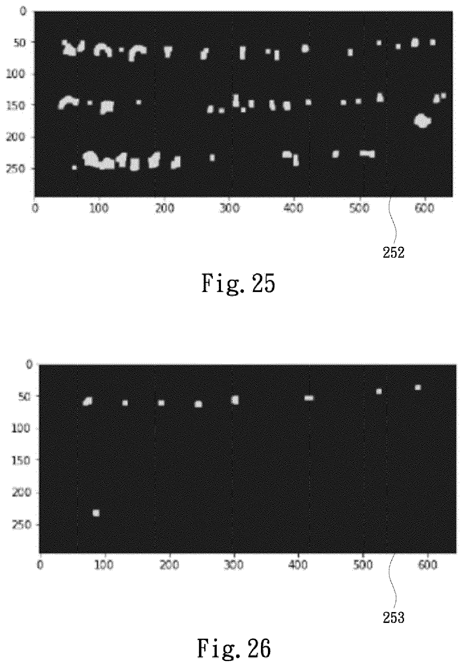

In one embodiment, please refer to FIG. 3, FIG. 6, FIG. 7, FIG. 8, FIG. 9, FIG. 10, FIG. 11, FIG. 12, FIG. 13, FIG. 14, FIG. 15, FIG. 16, FIG. 17, FIG. 18, FIG. 19, FIG. 20, FIG. 21, FIG. 22, FIG. 23, FIG. 24, FIG. 25, and FIG. 26. Step 13 of the method 10 further includes a sub-step 131: obtaining at least two partial feature colour distribution information 217, 218 from the authorized product data 212, analyzing colour of the image optical feature distribution information 211 to generate at least two feature colour distribution information 219, 250 which are the same as or similar to the at least two partial feature colour distribution information 217, 218, respectively, and comparing each feature colour distribution information 219 (250) with the partial feature colour distribution information 217 (218) correlated thereto. For the convenience of description, it is assumed that the anti-counterfeiting feature 32 is composed of a red sub-yarn 322 and a green sub-yarn 323. The arithmetic module 21 retrieves the at least two partial feature colour distribution information 217, 218 from the authorized product data 212. The at least two partial feature colour distribution information 217, 218 can be stored in a cloud server 40 in advance and can be retrieved by the arithmetic module 21. In addition, the partial feature colour distribution information 217 provides a distribution of a red sub-yarn on an anti-counterfeiting feature of an authorized product, and the partial feature colour distribution information 218 provides a distribution of a green sub-yarn on the anti-counterfeiting feature of the authorized product, and combination of the at least two partial feature colour distribution information 217, 218 is an image optical distribution feature 251 representing the anti-counterfeiting feature of the authorized product. Then, the arithmetic module 21 analyzes colour of the image optical feature distribution information 211 and generates the at least two feature colour distribution information 219, 250. The feature colour distribution information 219 provides a distribution of the red sub-yarn 322 on the anti-counterfeiting feature 32, and the feature colour distribution information 250 provides a distribution of the green sub-yarn 323. In addition, sampling colour of each of the feature colour distribution information 219 (250) is the same as or similar to sampling colours of one of the partial feature colour distribution information 217 (218). Further, the arithmetic module 21 compares the feature colour distribution information 219 with the correlated partial feature colour distribution information 217 and generates a distribution difference information 252 based on the red sub-yarn 322. The arithmetic module 21 also compares the feature colour distribution information 250 with the correlated partial feature colour distribution information 218 and generates a distribution difference information 253 based on the green sub-yarn 323. In view of FIG. 15 and FIG. 16, no difference marks are indicated on the two distribution difference information 252, 253, which represents that there is no difference between the feature colour distribution information 219 and the correlated partial feature colour distribution information 217; and there is no difference between the feature colour distribution information 250 and the correlated partial feature colour distribution information 218. That is, the fabric 30 is the same as the authorized product. In contrast, as shown in FIG. 25 and FIG. 26, there are difference marks indicated on the two distribution difference information 252, 253, which represents that the fabric 30 is different from the authorized product. In one embodiment, the arithmetic module 21 performs statistical analysis based on the distribution difference information 252 and the distribution difference information 253. If a difference value between the image optical distribution feature 251 and the image optical feature distribution information 211 is greater than or equal to a threshold value, it is determined that the fabric 30 is different from the authorized product, and the counterfeit prompt information 216 is prompted. If a difference value is less than the threshold value, the fabric 30 is determined to be the same as the authorized product and the authorized product prompt information 215 is prompted. In addition, calculation and determination formula of the aforementioned difference value are exemplified as follows:

$$\text{Dis}(T, Q) = \frac{1}{N_{\text{pixel}}} \sum_{\text{color} \in C} \text{XOR}(T_{\text{color}}, Q_{\text{color}})$$

and ,

$$Match(T, Q) = \begin{cases} \text{true,} & \text{Dis}(T, Q) < D_{\text{threshold}} \\ \text{false,} & \text{Dis}(T, Q) \geq D_{\text{threshold}} \end{cases}$$

Wherein T represents one of the partial feature colour distribution information 217 (218), Q represents one of the feature colour distribution information 219 (250), and C represents a colour group of the fabric 30 (in this embodiment, C={red, green}), $N_{\text{pixel}}$ represents a total number of pixels of the partial feature colour distribution information 217, 218 and the feature colour distribution information 219, 250, and $D_{\text{threshold}}$ represents the threshold value.

On the other hand, in one embodiment, the electronic device 20 is connected to the cloud server 40, and the authorized product data 212 is stored in the cloud server 40. Besides, the fabric serial number 221 or the image optical feature distribution information 211 is applied as an index for the arithmetic module 21 retrieving the authorized product data 212 correlated with the fabric serial number 221 or the image optical feature distribution information 211 from the cloud server 40. In addition, the cloud server 40 is implemented by blockchain storage to encrypt the authorized product data 212. In an embodiment, the cloud server 40 attaches a timestamp to the authorized product data 212 or store the authorized product data 212 by an encrypted method. The aforementioned encryption method can be implemented by adding a hash value to the authorized product data 212 or by other methods. Accordingly, the invention ensures that the authorized product data 212 cannot be tampered after being written into the cloud server 40 by a distributed computing architecture, such as a blockchain, thereby providing confidentiality and avoiding being tampered.

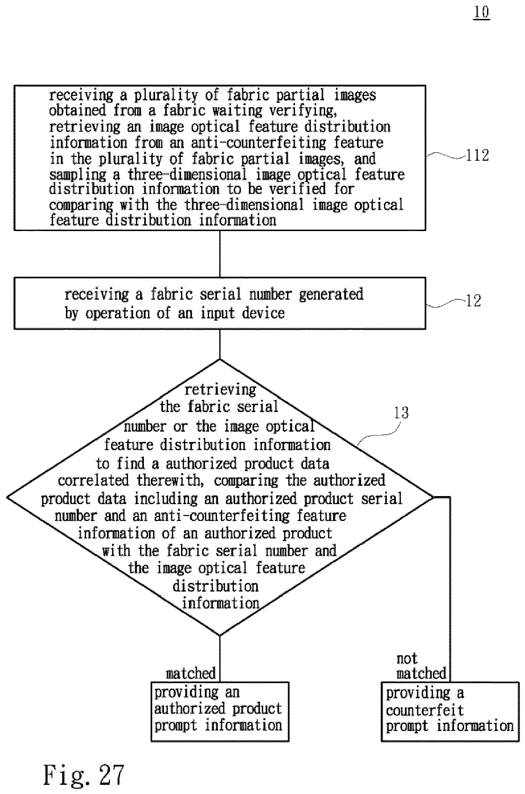

On the other hand, please refer to FIG. 27; in one embodiment, the anti-counterfeiting feature information 214 of the authorized product includes a planar image optical feature distribution information and a three-dimensional image optical feature distribution information so as to enhance a strength of the invention to verify an authenticity of the fabric 30. Also, step 11 of the method 10 further includes a sub-step 112: receiving a plurality of fabric partial images 201 obtained from the fabric waiting verifying, retrieving the image optical feature distribution information 211 from the anti-counterfeiting feature 32 in the plurality of fabric partial images 201, and sampling a three-dimensional image optical feature distribution information to be verified for comparing with the three-dimensional image optical feature distribution information. Specifically, a planar image optical feature distribution information is a planar image generated based on the fabric 30, and the planar image expresses the image optical feature distribution information 211 of the fabric 30 in a two-dimensional manner. The three-dimensional image optical feature distribution information expresses the image optical feature distribution information 211 of the fabric 30 in a in a three-dimensional manner based on the fabric 30. In addition, the three-dimensional image optical feature distribution information is provided for the arithmetic module 21 to identify a colour distribution of the at least two sub-yarns 322, 323 of the fabric 30 under different three-dimensional angles to sample the three-dimensional image optical feature distribution information to be verified; in this way, the arithmetic module 21 is capable of strengthening verification of an authenticity of the fabric 30.

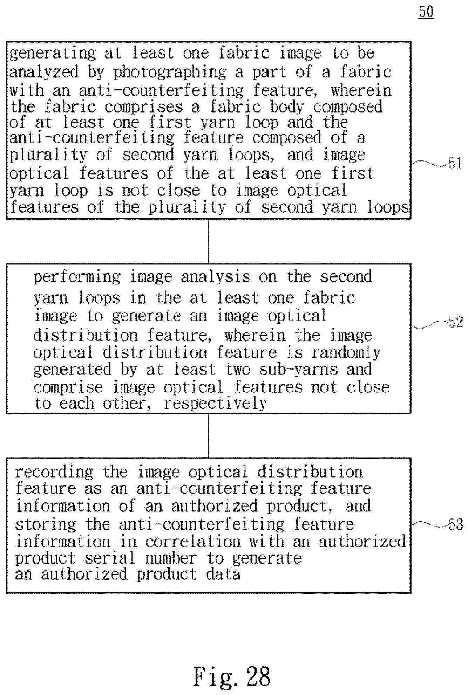

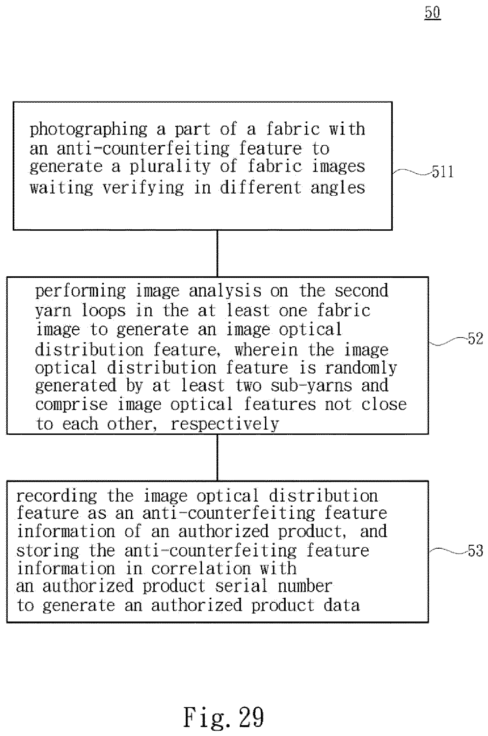

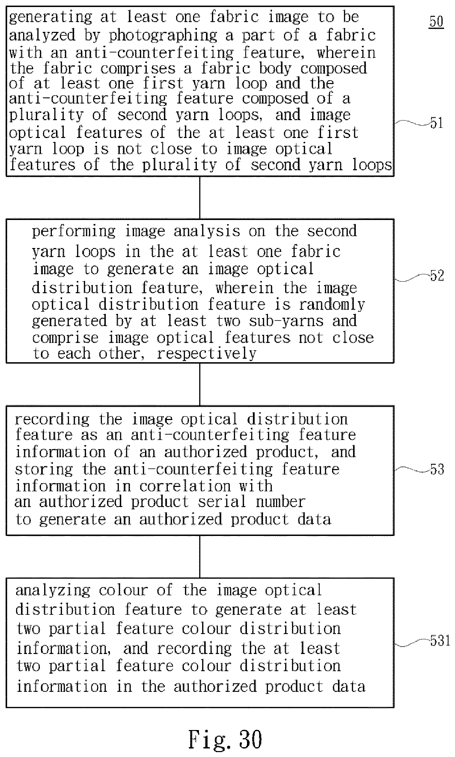

Please refer to FIG. 2, FIG. 28, FIG. 29, and FIG. 30. The invention further provides a method 50 for establishing an authorized product data with fabric features. The method 50 includes following steps of:

step 51: generating at least one fabric image 202 to be analyzed by photographing a part of the fabric 30 with the anti-counterfeiting feature 32. The fabric 30 comprises the fabric body 31 comprising the at least one first yarn loop 311 and the anti-counterfeiting feature 32 composed of the second yarn loops 321, wherein image optical features of the at least one first yarn loops 311 is not close to image optical features of each of the second yarn loops 321;
step 52: performing image analysis on the second yarn loops 321 in the at least one fabric image 202 to generate the image optical distribution feature 251, wherein the image optical distribution feature 251 is randomly generated by the at least two sub-yarns 322, 323 which form the plurality of second yarn loops 321 and comprise image optical features not close to each other, respectively; and
step 53: recording the image optical distribution feature 251 as the anti-counterfeiting feature information 214 of the authorized product, and storing the anti-counterfeiting feature information 214 in correlation with the authorized product serial number 213 to generate the authorized product data 212.

The method 50 is described in detail. Step 51 is performed to photograph a part of the fabric 30 with the anti-counterfeiting feature 32 to generate the at least one fabric image 202 waiting verifying. Then, step 52 is proceeded to perform the image analysis on the second yarn loops 321 in the at least one fabric image 202 to generate the image optical distribution feature 251. Specifically, the image optical distribution feature 251 is generated by each the second yarn loop 321 of the at least two sub-yarns 322, 323. Since the at least two sub-yarns 322, 323 are twisted to form the second yarn loops 321 in a random manner, patterns of the at least two sub-yarns 322, 323 are randomly appeared on a surface of each of the second yarn loops 321. Furthermore, since image optical features of the at least two sub-yarns 322, 323 are not similar, the at least two sub-yarns 322, 323 are clearly distinguished on each of the second yarn loops 321. In detail, if the at least two sub-yarns 322, 323 belong to different colour hues in the natural colour system, a colour hue angle between the two colour hues is greater than or equal to 30 degrees. If the at least two sub-yarns 322, 323 belong to a same colour hue, the at least two sub-yarns 322, 323 are separated by at least three colour levels. Further, step 53 is proceeded to record the image optical distribution feature 251 as the anti-counterfeiting feature information 214 of the authorized product, and to store the anti-counterfeiting feature information 214 in correlation with the authorized product serial number 213 so as to complete the authorized product data 212. When the anti-counterfeiting feature information 214 is retrieved, the authorized product serial number 213 correlated to the anti-counterfeiting feature information 214 in the authorized product data 212 is retrieved together; or when the authorized product serial number 213 is retrieved, the anti-counterfeiting feature information 214 correlated with the authorized product serial number 213 in the authorized product data 212 is retrieved together.

In one embodiment, colours of the at least two sub-yarns 322, 323 are not absolute black, so as to prevent the at least two sub-yarns 322, 323 from absorbing light and being incapable of generating the fabric image 202 to be analyzed when the anti-counterfeiting feature 32 is photographed. In addition, in order to prevent a case where the two sub-yarns 322, 323 generate a large amount of reflection of light during an image capturing process and the two sub-yarns 322, 323 cannot be identified by the arithmetic module 21, the two sub-yarns 322, 323 are not reflective yarns or metal yarns that produce a large amount of reflective effects. In a similar way, since white produces a large amount of reflection of light after being projected by light, the two sub-yarns 322, 323 are not absolute white or gray mixed with absolute white and absolute black in proportion.

In one embodiment, the authorized product serial number 213 is a serial number or the authorized product serial number 213 is defined by a brand owner, wherein any two of the serial numbers are not repeated. For example, the brand owner can define the authorized product serial number 213 based on production information of the fabric 30; or the brand owner can define the authorized product serial number 213 based on an article number or a batch number of the fabric 30. In addition, in one embodiment, the authorized product data 212 further includes a first point-of-sale data which is generated after the fabric 30 is first sold at a sales location, and the first point-of-sale data provides information of a sales location of a store where the fabric 30 is first sold. For example, the first point-of-sale data provides store name and address of the sales location where sells the fabric 30.

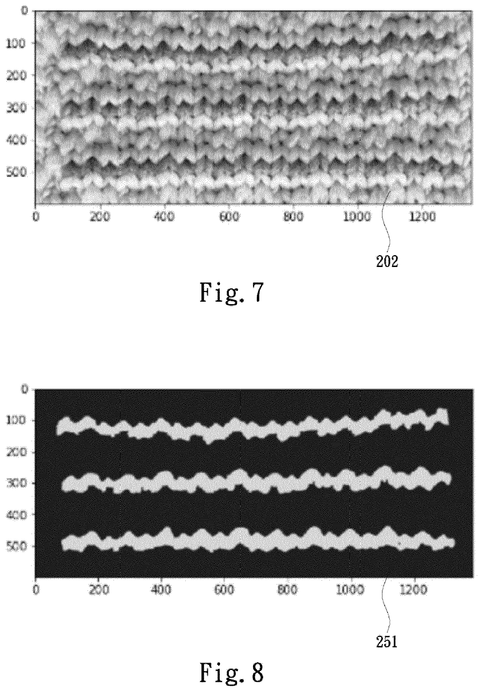

In one embodiment, step 53 of the method 50 further includes sub-step 531: analyzing colour of the image optical distribution feature 251 to generate the at least two partial feature colour distribution information 217, 218, and recording the at least two partial feature colour distribution information 217, 218 in the authorized product data 212. As shown in FIG. 7, FIG. 8, FIG. 9, FIG. 10, FIG. 11, FIG. 12, FIG. 13, FIG. 14, FIG. 15, FIG. 16, FIG. 17, FIG. 18, FIG. 19, FIG. 20, FIG. 21, FIG. 22, FIG. 23, FIG. 24, FIG. 25, and FIG. 26, the anti-counterfeiting feature 32 is composed of the red sub-yarn 322 and the green sub-yarn 323. In sub-step 531, colour difference of the image optical distribution feature 251 is analyzed, and a distribution of the red sub-yarn 322 and a distribution of the green sub-yarn 323 are recorded in the at least two partial feature colour distribution information 217, 218, respectively. Then, the at least two partial feature colour distribution information 217, 218 are recorded in the authorized product data 212.

Further, in one embodiment, in order to enhance an anti-counterfeiting identification of the fabric 30, step 51 of the method 50 of the invention further includes sub-step 511: photographing a part of the fabric 30 with the anti-counterfeiting feature 32 to generate a plurality of fabric images 202 waiting verifying in different angles, sampling the plurality of fabric images 202 waiting verifying to generate the planar image optical feature distribution information and the three-dimensional image optical feature distribution information, and recording the planar image optical feature distribution information and the three-dimensional image optical feature distribution information in the anti-counterfeiting feature information 214. The planar image optical feature distribution information provides colour distribution of the fabric 30 in a two-dimensional manner by performing image processing on the each fabric image 202 to be analyzed, and the three-dimensional image optical feature distribution information provides colour distribution of the fabric 30 in a three-dimensional manner based on the fabric images 202 to be analyzed. In this way, a user does not need to limit a photographing angle when verifying the fabric 30, and therefore verification by the user can be facilitated.

**Claims**

1. A method (10) for verifying a product authenticity with fabric features, the method implemented by an electronic device (20) and comprising a step of receiving at least one fabric partial image (201) and performing image analysis on the at least one fabric partial image (201) to determine a fabric body (31) comprising at least one first yarn loop (311) and an anti-counterfeiting feature (32) composed of a plurality of second yarn loops (321), and analyzing an image optical feature distribution information (211) from a part of the anti-counterfeiting feature (32) after the anti-counterfeiting feature (32) is determined, wherein the image optical feature distribution information (211) is randomly generated based on at least two sub-yarns (322. 323), and the at least two sub-yarns (322, 323) compose the plurality of second yarn loops (321) and are different in colour based on a natural colour system (NCS), wherein the method is **characterized in** further comprising steps of:

   receiving a fabric serial number (221) generated by operation of an input device (22); and
   retrieving the fabric serial number (221) or the image optical feature distribution information (211) to find a authorized product data (212) correlated therewith, the authorized product data (212) including an authorized product serial number (213) and an anti-counterfeiting feature information (214) of an authorized product, which are provided to comparing with the fabric serial number (221) and the image optical feature distribution information (211); wherein providing an authorized product prompt information if the authorized product serial number (213) and the anti-counterfeiting feature information (214) of the authorized product are matched with the fabric serial number (221) and the image optical feature distribution information (211); and wherein providing a counterfeit prompt information if the authorized product serial number (213) and the anti-counterfeiting feature information (214) of the authorized product are not matched with the fabric serial number (221) and the image optical feature distribution information (211).

2. The method (10) for verifying a product authenticity with the fabric features as claimed in claim 1, wherein the method (10) further comprises photographing a fabric waiting verifying by a camera device (23) to generate the at least one fabric partial image (201).

3. The method (10) for verifying a product authenticity with the fabric features as claimed in claim 2, wherein the method (10) further comprises receiving the at least one fabric partial image (201) obtained from the fabric waiting verified, and inducting the anti-counterfeiting feature (32) in the at least one fabric partial image (201) via an image similarity analysis.

4. The method (10) for verifying a product authenticity with the fabric features as claimed in claim 3, wherein the method (10) further comprises obtaining at least two partial feature colour distribution information (217, 218) from the authorized product data (212), analyzing colour of the image optical feature distribution information (211) to generate at least two feature colour distribution information (219, 250) which are the same as or similar to the at least two partial feature colour distribution information (217, 218), respectively, and comparing each feature colour distribution information (219; 250) with the partial feature colour distribution information (217; 218) correlated thereto.

5. The method (10) for verifying a product authenticity with the fabric features as claimed in claim 1, wherein the authorized product data (212) is stored in a cloud server (40).

6. The method (10) for verifying a product authenticity with the fabric features as claimed in claim 5, wherein the cloud server (40) is implemented by blockchain storage.

7. The method (10) for verifying a product authenticity with the fabric features as claimed in claim 1, wherein the anti-counterfeiting feature information (214) of the authorized product includes a planar image optical feature distribution information and a three-dimensional image optical feature distribution information, and the method (10) further comprises receiving a plurality of fabric partial images (201) obtained from the fabric waiting verifying, retrieving the image optical feature distribution information (211) from the anti-counterfeiting feature (32) in the plurality of fabric partial images (201), and sampling a three-dimensional image optical feature distribution information to be verified for comparing with the three-dimensional image optical feature distribution information.

8. The method (10) for verifying a product authenticity with the fabric features as claimed in claim 1, wherein the authorized product prompt information includes at least one of a product information, a brand manufacturer, a manufacturing country, a first point-of-sale, a location of an anti-counterfeiting feature (32), a fabric image of the anti-counterfeiting feature (32), and the authorized product serial number (213).

9. A method (50) for establishing an authorized product data (212) with fabric features, comprising a step of generating at least one fabric image (202) to be analyzed by photographing a part of a fabric (30) with an anti-counterfeiting feature (32), wherein the fabric (30) comprises a fabric body (31) comprising at least one first yarn loop (311) and the anti-counterfeiting feature (32) composed of a plurality of second yarn loops (321), and image optical features of the at least one first yarn loop (311) are different from image optical features of the plurality of second yarn loops (321), wherein the method is **characterized in** further comprising steps of:

performing image analysis on the second yarn loops (321) in the at least one fabric image (202) to generate an image optical distribution feature (251), wherein the image optical distribution feature (251) is randomly generated by at least two sub-yarns (322, 323), and the at least two sub-yarns (322, 323) compose the plurality of second yarn loops (321) and are different in colour based on a natural colour system (NCS); and
recording the image optical distribution feature (251) as an anti-counterfeiting feature information (214) of an authorized product, and storing the anti-counterfeiting feature information (214) in correlation with an authorized product serial number (213) to generate an authorized product data (212).

10. The method (50) for establishing the authorized product data (212) with the fabric features as claimed in claim 9, wherein the at least two sub-yarns (322, 323) belong to a same colour hue in the NCS and are separated by at least three colour levels apart.

11. The method (50) for establishing the authorized product data (212) with the fabric features as claimed in claim 9, wherein colours of the at least two sub-yarns (322, 323) exclude absolute white, absolute black, or gray mixed with absolute white and absolute black in proportion.

12. The method (50) for establishing the authorized product data (212) with the fabric features as claimed in claim 9, wherein the at least two sub-yarns (322, 323) are made to be prevented from generating a large amount of reflection light during the step of generating at least one fabric image (202).

13. The method (50) for establishing the authorized product data (212) with the fabric features as claimed in claim 9, wherein the authorized product serial number (213) is defined by a brand owner.

14. The method (50) for establishing the authorized product data (212) with the fabric features as claimed in claim 13, wherein the authorized product data (212) includes a first point-of-sale data, and the first point-of-sale data is generated after the fabric (30) is first sold at a sales location.

15. The method (50) for establishing the authorized product data (212) with the fabric features as claimed in claim 14, wherein the method (50) further comprises photographing a part of the fabric (30) with the anti-counterfeiting feature (32) to generate a plurality of fabric images (202) waiting verifying in different angles, sampling the plurality of fabric images (202) waiting verifying to generate a planar image optical feature distribution information and a three-dimensional image optical feature distribution information, and recording the planar image optical feature distribution information and the three-dimensional image optical feature distribution information in the anti-counterfeiting feature information (214).

16. The method (50) for establishing the authorized product data (212) with the fabric features as claimed in claim 9, wherein the method (50) further comprises analyzing colour of the image optical distribution feature (251) to generate at least two partial feature colour distribution information (217, 218), and recording the at least two partial feature colour distribution information (217, 218) in the authorized product data (212).

17. The method (50) for establishing the authorized product data (212) with the fabric features as claimed in claim 9, wherein the authorized product data (212) further includes a first point-of-sale data, and the first point-of-sale data is generated after the fabric (30) is first sold at a sales location.

18. The method (50) for establishing the authorized product data (212) with the fabric features as claimed in claim 9, wherein the method (50) further comprises photographing a part of the fabric (50) with the anti-counterfeiting feature (32) to generate a plurality of fabric images (202) to waiting verifying in different angles, sampling the plurality of fabric images (202) waiting verifying to generate a planar image optical feature distribution information and a three-dimensional image optical feature distribution information, and recording the planar image optical feature distribution information and the three-dimensional image optical feature distribution information in the anti-counterfeiting feature information (214).

## Patentansprüche

1. Verfahren (10) zur Verifizierung einer Produktauthentizität mit Gewebemerkmalen, wobei das Verfahren von einer elektronischen Vorrichtung (20) implementiert wird und einen Schritt des Empfangens mindestens eines Gewebeteilbildes (201) und des Durchführens einer Bildanalyse des mindestens einen Gewebeteilbildes (201) umfasst, um einen Gewebekörper (31) zu bestimmen, der mindestens eine erste Garnschlaufe (311) und ein Fälschungsschutzmerkmal (32) aufweist, das aus einer Vielzahl von zweiten Garnschlaufen (321) besteht, und einen Schritt des Analysierens von Informationen (211) zur Verteilung optischer Bildmerkmale von einem Teil des Fälschungsschutzmerkmals (32) nach dem Bestimmen des Fälschungsschutzmerkmals (32) umfasst, wobei die Informationen (211) zur Verteilung optischer Bildmerkmale willkürlich basierend auf mindestens zwei Untergarnen (322, 323) erzeugt werden, und wobei die mindestens zwei Untergarne (322, 323) die Vielzahl von zweiten Garnschlaufen (321) bilden und sich basierend auf einem Natural Color System (NCS) farblich unterscheiden, wobei das Verfahren **dadurch gekennzeichnet ist, dass** es ferner die folgenden Schritte umfasst:

Empfangen einer ersten Gewebeseriennummer (221), die durch die Betätigung einer Eingabevorrichtung (22) erzeugt wird; und
Abrufen der Gewebeseriennummer (221) oder der Informationen (211) zur Verteilung optischer Bildmerkmale, um autorisierte Produktdaten (212) zu finden, die damit korrelieren, wobei die autorisierten Produktdaten (212) eine autorisierte Produktseriennummer (213) und Fälschungsschutzmerkmalsinformation (214) eines autorisierten Produkts umfassen, die für den Vergleich mit der Gewebeseriennummer (221) und den Informationen (211) zur Verteilung optischer Bildmerkmale bereitgestellt werden; wobei autorisierte Produktabfrageinformationen bereitgestellt werden, wenn die autorisierte Produktseriennummer (213) und die Fälschungsschutzmerkmalsinformationen (214) des autorisierten Produkts mit der Gewebeseriennummer (221) und den Informationen (211) zur Verteilung optischer Bildmerkmale übereinstimmen; und wobei Fälschungsabfrageinformationen bereitgestellt werden, wenn die autorisierte Produktseriennummer (213) und die Fälschungsschutzmerkmalsinformationen (214) des autorisierten Produkts nicht mit der Gewebeseriennummer (221) und den Informationen (211) zur Verteilung optischer Bildmerkmale übereinstimmen.

2. Verfahren (10) zur Verifizierung einer Produktauthentizität mit den Gewebemerkmalen nach Anspruch 1, wobei das Verfahren (10) ferner das Fotografieren eines Gewebes, das auf eine Verifizierung wartet, mit einer Kameravorrichtung (23) umfasst, um das mindestens eine Gewebeteilbild (201) zu erzeugen.

3. Verfahren (10) zur Verifizierung einer Produktauthentizität mit den Gewebemerkmalen nach Anspruch 2, wobei das Verfahren (10) ferner das Empfangen des mindestens einen Gewebeteilbildes (201), das aus dem auf die Verifizierung wartenden Gewebe erhalten wird, und das Einbringen des Fälschungsschutzmerkmals (32) in das mindestens eine Gewebeteilbild (201) mittels einer Bildähnlichkeitsanalyse umfasst.

4. Verfahren (10) zur Verifizierung einer Produktauthentizität mit den Gewebemerkmalen nach Anspruch 3, wobei das Verfahren (10) ferner umfasst das Erhalten von mindestens zwei Teilinformationen (217, 218) über die Merkmalsfarbverteilung von den autorisierten Produktdaten (212), das Analysieren der Farbe der Informationen (211) zur Verteilung optischer Bildmerkmale zum Erzeugen von mindestens zwei Merkmalsfarbverteilungsinformationen (219, 250), die gleich oder ähnlich den mindestens zwei Teilinformationen (217, 218) über die Merkmalsfarbverteilung sind, und das Vergleichen jeder Merkmalsfarbverteilungsinformation (219, 250) mit den Teilinformationen (217, 218) über die Merkmalsfarbverteilung (217, 218), die damit korrelieren.

5. Verfahren (10) zur Verifizierung einer Produktauthentizität mit den Gewebemerkmalen nach Anspruch 1, wobei die autorisierten Produktdaten (212) in einem Cloud-Server (40) gespeichert sind.

6. Verfahren (10) zur Verifizierung einer Produktauthentizität mit den Gewebemerkmalen nach Anspruch 5, wobei der Cloudserver (40) durch Blockchain-Speicherung implementiert wird.

7. Verfahren (10) zur Verifizierung einer Produktauthentizität mit den Gewebemerkmalen nach Anspruch 1, wobei die Fälschungsschutzmerkmalsinformationen (214) des autorisierten Produkts Informationen über die Verteilung der optischen Merkmale eines planaren Bildes und Informationen über die Verteilung der optischen Merkmale eines dreidimensionalen Bildes umfassen, und wobei das Verfahren (10) ferner umfasst das Empfangen einer Vielzahl von Gewebeteilbildern (201), die von dem auf die Verifizierung wartenden Gewebe erhalten werden, das Abrufen der Informationen (211) zur Verteilung optischer Bildmerkmale von dem Fälschungsschutzmerkmal (32) in der Vielzahl von Gewebeteilbildern (201), und das Abtasten einer zu verifizierenden Information über die Verteilung der optischen Merkmale eines dreidimensionalen Bildes zum Vergleich mit Informationen über die Verteilung der optischen Merkmale eines dreidimensionalen Bildes.

8. Verfahren (10) zur Verifizierung einer Produktauthentizität mit den Gewebemerkmalen nach Anspruch 1, wobei die autorisierten Produktabfrageinformationen mindestens eines aus Produktinformationen, einem Markenhersteller, einem Herstellungsland, einem ersten Verkaufsort, einer Stelle eines Fälschungsschutzmerkmals (32), einem Gewebebild des Fälschungsschutzmerkmals (32) und der autorisierten Produktseriennummer (213) umfassen.

9. Verfahren (50) zur Herstellung autorisierter Produktdaten (212) mit den Gewebemerkmalen, das einen Schritt des Erzeugens mindestens eines zu analysierenden Gewebebildes (202) durch Fotografieren eines Teils eines Gewebes (30) mit einem Fälschungsschutzmerkmal (32) umfasst, wobei das Gewebe (30) einen Gewebekörper (31) aufweist, der mindestens eine erste Garnschlaufe (311) und das Fälschungsschutzmerkmal (32) aufweist, das aus einer Vielzahl von zweiten Garnschlaufen (321) besteht, und wobei sich die optischen Bildmerkmale der mindestens einen ersten Garnschlaufe (311) von den optischen Bildmerkmalen der Vielzahl von zweiten Garnschlaufen (321) unterscheiden, wobei das Verfahren **dadurch gekennzeichnet ist, dass** es ferner die folgenden Schritte umfasst:

Durchführen einer Bildanalyse der zweiten Garnschlaufen (321) in dem mindestens einen Gewebebild (202) zur Erzeugung eines optischen Bildverteilungsmerkmals (251), wobei das optische Bildverteilungsmerkmal (251) willkürlich von mindestens zwei Untergarnen (322, 323) erzeugt wird, und wobei die mindestens zwei Untergarne (322, 323) die Vielzahl von zweiten Garnschlaufen (321) bilden und sich basierend auf einem Natural Color System (NCS) farblich unterscheiden; und
Aufzeichnen des optischen Bildverteilungsmerkmals (251) als Fälschungsschutzmerkmalsinformationen (214) eines autorisierten Produkts, und Speichern der Fälschungsschutzmerkmalsinformationen (214) in Korrelation mit einer autorisierten Produktseriennummer (213) zur Erzeugung autorisierter Produktdaten (212).

10. Verfahren (50) zur Herstellung der autorisierten Produktdaten (212) mit den Gewebemerkmalen nach Anspruch 9, wobei die mindestens zwei Untergarne (322, 323) zu demselben Farbton im NCS gehören und um mindestens drei Farbstufen voneinander getrennt sind.

11. Verfahren (50) zur Herstellung der autorisierten Produktdaten (212) mit den Gewebemerkmalen nach Anspruch 9, wobei Farben der mindestens zwei Untergarne (322, 323) absolutes weiß, absolutes schwarz, oder grau anteilig gemischt mit absolutem weiß und absolutem schwarz ausschließen.

**12.** Verfahren (50) zur Herstellung der autorisierten Produktdaten (212) mit den Gewebemerkmalen nach Anspruch 9, wobei die mindestens zwei Untergarne (322, 323) so beschaffen sind, dass sie während des Schritts der Erzeugung mindestens eines Gewebebildes (202) keine große Menge an Reflexionslicht erzeugen.

**13.** Verfahren (50) zur Herstellung der autorisierten Produktdaten (212) mit den Gewebemerkmalen nach Anspruch 9, wobei die autorisierte Produktseriennummer (213) von einem Markeninhaber definiert wird.

**14.** Verfahren (50) zur Herstellung der autorisierten Produktdaten (212) mit den Gewebemerkmalen nach Anspruch 13, wobei die autorisierten Produktdaten (212) erste Verkaufsortdaten umfassen, und wobei die ersten Verkaufsortdaten erzeugt werden, nachdem das Gewebe (30) zum ersten Mal an einem Verkaufsort verkauft wird.

**15.** Verfahren (50) zur Herstellung der autorisierten Produktdaten (212) mit den Gewebemerkmalen nach Anspruch 14, wobei das Verfahren (50) ferner umfasst das Fotografieren eines Teils des Gewebes (30) mit dem Fälschungsschutzmerkmal (32) zur Erzeugung einer Vielzahl von Gewebebildern (202), die auf eine Verifizierung warten, in verschiedenen Winkeln, Abtasten der Vielzahl von Gewebebildern (202), die auf eine Verifizierung warten, um Informationen über die Verteilung der optischen Merkmale eines planaren Bildes und Informationen über die Verteilung der optischen Merkmale eines dreidimensionalen Bildes zu erzeugen, und Aufzeichnen der Informationen über die Verteilung der optischen Merkmale eines planaren Bildes und der Informationen über die Verteilung der optischen Merkmale eines dreidimensionalen Bildes in den Fälschungsschutzmerkmalsinformationen (214).

**16.** Verfahren (50) zur Herstellung der autorisierten Produktdaten (212) mit den Gewebemerkmalen nach Anspruch 9, wobei das Verfahren (50) ferner umfasst das Analysieren der Farbe in dem optischen Bildverteilungsmerkmal (251) zur Erzeugung von mindestens zwei Teilinformationen (217, 218) über die Merkmalsfarbverteilung, und das Aufzeichnen der mindestens zwei Teilinformationen (217, 218) über die Merkmalsfarbverteilung in den autorisierten Produktdaten (212).

**17.** Verfahren (50) zur Herstellung der autorisierten Produktdaten (212) mit den Gewebemerkmalen nach Anspruch 9, wobei die autorisierten Produktdaten (212) ferner erste Verkaufsortdaten umfassen, und wobei die ersten Verkaufsortdaten erzeugt werden, nachdem das Gewebe (30) zum ersten Mal an einem Verkaufsort verkauft wird.

**18.** Verfahren (50) zur Herstellung der autorisierten Produktdaten (212) mit Gewebemerkmalen nach Anspruch 9, wobei das Verfahren (50) ferner umfasst das Fotografieren eines Teils des Gewebes (50) mit dem Fälschungsschutzmerkmal (32) zur Erzeugung einer Vielzahl von Gewebebildern (202), die auf eine Verifizierung warten, in verschiedenen Winkel, Abtasten der Vielzahl von Gewebebildern (202), die auf eine Verifizierung warten, um Informationen über die Verteilung der optischen Merkmale eines planaren Bildes und Informationen über die Verteilung der optischen Merkmale eines dreidimensionalen Bildes zu erzeugen, und Aufzeichnen der Informationen über die Verteilung der optischen Merkmale eines planaren Bildes und der Informationen über die Verteilung der optischen Merkmale eines dreidimensionalen Bildes in den Fälschungsschutzmerkmalsinformationen (214).

**Revendications**

**1.** Procédé (10) pour vérifier l'authenticité d'un produit avec des caractéristique de tissu, le procédé étant mis en oeuvre par un dispositif électronique (20) et comprenant une étape consistant à recevoir au moins une image partielle de tissu (201) et à effectuer une analyse d'image sur la au moins une image partielle de tissu (201) pour déterminer un corps de tissu (31) comprenant au moins une première boucle de fil (311) et une caractéristique anti-contrefaçon (32) composée d'une pluralité de secondes boucles de fil (321), et à analyser des informations de distribution de caractéristique optique d'image (211) à partir d'une partie de la caractéristique anti-contrefaçon (32) après que la caractéristique anti-contrefaçon (32) ait été déterminée, dans lequel les informations de distribution de caractéristique optique d'image (211) sont générées de manière aléatoire sur la base d'au moins deux sous-fils (322, 323), et les au moins deux sous-fils (322, 323) composent la pluralité de secondes boucles de fil (321) et sont de couleur différente sur la base d'un système de couleur naturelle (NCS), dans lequel le procédé est **caractérisé en ce qu'**il comprend en outre les étapes consistant à :

recevoir un numéro de série de tissu (221) généré par une opération d'un dispositif d'entrée (22) ; et récupérer le numéro de série de tissu (221) ou l'information de distribution de caractéristique optique d'image (211) pour trouver des données de produit autorisé (212) corrélées avec ceux-ci, les données de produit autorisé (212) comprenant un numéro de série de produit autorisé (213) et des informations de caractéristique anti-contrefaçon (214) d'un produit autorisé, qui sont fournies pour une comparaison avec le numéro de série de tissu (221) et les informations de distribution de caractéristique optique de l'image (211) ; dans lequel la fourniture d'informations rapides de produit autorisé intervient si le numéro de série de produit autorisé (213) et les informations de caractéristique anti-contrefaçon (214) du produit autorisé sont mis en correspondance avec le numéro de série de tissu (221) et les informations de distribution de caractéristique optique d'image (211) ; et dans lequel la fourniture d'informations rapides de contrefaçon intervient si le numéro de série de produit autorisé (213) et les informations de caractéristique anti-contrefaçon (214) du produit autorisé ne sont pas mis en correspondance avec le numéro de série de tissu (221) et les informations de distribution de caractéristique optique d'image (211).

2. Procédé (10) pour vérifier une authenticité de produit avec les caractéristique de tissu selon la revendication 1, dans lequel le procédé (10) comprend en outre la photographie d'un tissu en attente de vérification par un dispositif de caméra (23) pour générer la au moins une image partielle de tissu (201).

3. Procédé (10) pour vérifier une authenticité de produit avec les caractéristique de tissu selon la revendication 2, dans lequel le procédé (10) comprend en outre les étapes consistant à recevoir la au moins une image partielle de tissu (201) obtenue à partir du tissu en attente de vérification, et à induire la caractéristique anti-contrefaçon (32) dans la au moins une image partielle de tissu (201) via une analyse de similitude d'image.

4. Procédé (10) pour vérifier une authenticité de produit avec les caractéristique de tissu selon la revendication 3, dans lequel le procédé (10) comprend en outre les étapes consistant à obtenir au moins deux informations de distribution de couleur de caractéristique partielle (217, 218) à partir des données de produit autorisé (212), analyser une couleur des informations de distribution de caractéristique optique d'image (211) pour générer au moins deux informations de distribution de couleur de caractéristique (219, 250) qui sont identiques ou similaires aux au moins deux informations de distribution de couleur de caractéristique partielle (217, 218), respectivement, et comparer chaque information de distribution de couleur de caractéristique (219 ; 250) avec les informations de distribution de couleur de caractéristique partielle (217 ; 218) corrélées à celles-ci.

5. Procédé (10) pour vérifier une authenticité de produit avec les caractéristique de tissu selon la revendication 1, dans lequel les données de produit autorisé (212) sont stockées dans un serveur en nuage (40).

6. Procédé (10) pour vérifier une authenticité de produit avec les caractéristique de tissu selon la revendication 5, dans lequel le serveur en nuage (40) est mis en oeuvre par stockage de chaîne de blocs.

7. Procédé (10) pour vérifier une authenticité de produit avec les caractéristique de tissu selon la revendication 1, dans lequel les informations de caractéristique anti-contrefaçon (214) du produit autorisé incluent un information de distribution de caractéristique optique d'image plane et une information de distribution de caractéristique optique d'image tridimensionnelle, et le procédé (10) comprend en outre les étapes consistant à recevoir une pluralité d'images partielles de tissu (201) obtenues à partir de la vérification d'attente de tissu, récupérer des informations de distribution de caractéristique optique d'image (211) à partir de la caractéristique anti-contrefaçon (32) dans la pluralité d'images partielles de tissu (201), et échantillonner une information de distribution de caractéristique optique d'image tridimensionnelle à vérifier pour comparaison avec l'information de distribution de caractéristique optique d'image tridimensionnelle.

8. Procédé (10) pour vérifier une authenticité de produit avec les caractéristique de tissu selon la revendication 1, dans lequel les informations rapide de produit autorisé incluent au moins l'un d'une information de produit, d'un fabricant de marque, d'un pays de fabrication, d'un premier point de vente, d'un emplacement d'une caractéristique anti-contrefaçon (32), d'une image de tissu de la caractéristique anti-contrefaçon (32), et du numéro de série de produit autorisé (213).

9. Procédé (50) pour établir des données de produit autorisé (212) avec des caractéristique de tissu, comprenant une étape de génération d'au moins une image de tissu (202) à analyser en photographiant une partie d'un tissu (30) avec une caractéristique anti-contrefaçon (32), dans lequel le tissu (30) comprend un corps de tissu (31) comprenant au moins une première boucle de fil (311) et la caractéristique anti-contrefaçon (32) composée d'une pluralité de secondes boucles de fil (321), et les caractéristiques optiques d'image de la au moins une première boucle de fil (311) sont différentes des caractéristiques optiques d'image de la pluralité de secondes boucles de fil (321), dans lequel le procédé est **caractérisé en ce qu'**il comprend en outre les étapes consistant à :

effectuer une analyse d'image sur les secondes boucles de fil (321) dans la au moins une image de tissu (202) pour générer une caractéristique de distribution optique d'image (251), dans lequel la caractéristique de distribution optique d'image (251) est générée de manière aléatoire par au moins deux sous-fils (322, 323), et les au moins deux sous-fils (322, 323) composent la pluralité de secondes boucles de fil (321) et sont de couleur différente sur la base d'un système de couleur naturelle (NCS) ; et

enregistrer la caractéristique de distribution optique d'image (251) en tant qu'information de caractéristique anti-contrefaçon (214) d'un produit autorisé, et stocker l'information de caractéristique anti-contrefaçon (214) en corrélation avec un numéro de série de produit autorisé (213) pour générer une donnée de produit autorisé (212).

10. Procédé (50) pour établir les données de produit autorisé (212) avec les caractéristique de tissu selon la revendication 9, dans lequel les au moins deux sous-fils (322, 323) appartiennent à une même teinte de couleur dans le NCS et sont séparés par au moins trois niveaux de couleur séparés.

11. Procédé (50) pour établir les données de produit autorisées (212) avec les caractéristique de tissu selon la revendication 9, dans lequel les couleurs des au moins deux sous-fils (322, 323) excluent le blanc absolu, le noir absolu ou le gris mélangé avec le blanc absolu et le noir absolu proportionnellement.

12. Procédé (50) pour établir les données de produit autorisées (212) avec les caractéristique de tissu selon la revendication 9, dans lequel les au moins deux sous-fils (322, 323) sont conçus pour être empêchés de générer une grande quantité de lumière de réflexion pendant l'étape de génération d'au moins une image de tissu (202).

13. Procédé (50) pour établir les données de produit autorisé (212) avec les caractéristique de tissu selon la revendication 9, dans lequel le numéro de série de produit autorisé (213) est défini par un propriétaire de marque.

14. Procédé (50) pour établir les données de produit autorisé (212) avec les caractéristique de tissu selon la revendication 13, dans lequel les données de produit autorisé (212) incluent des données de premier point de vente, et les données de premier point de vente sont générées après la première vente du tissu (30) dans un site de vente.

15. Procédé (50) pour établir les données de produit autorisées (212) avec les caractéristique de tissu selon la revendication 14, dans lequel le procédé (50) comprend en outre les étapes consistant à photographier une partie du tissu (30) avec la caractéristique anti-contrefaçon (32) pour générer une pluralité d'images de tissu (202) en attente de vérification sous différents angles, échantillonner la pluralité d'images de tissu (202) en attente de vérification pour générer une information de distribution de caractéristique optique d'image plane et une information de distribution de caractéristique optique d'image tridimensionnelle, et enregistrer l'information de distribution de caractéristique optique d'image plane et de l'information de distribution de caractéristique optique d'image tridimensionnelle dans l'information de caractéristique anti-contrefaçon (214).

16. Procédé (50) pour établir les données de produit autorisées (212) avec les caractéristique de tissu selon la revendication 9, dans lequel le procédé (50) comprend en outre les étapes consistant à analyser la couleur de la caractéristique de distribution optique d'image (251) pour générer au moins deux informations de distribution de couleur de caractéristique partielle (217, 218), et enregistrer les au moins deux informations de distribution de couleur de caractéristique partielle (217, 218) dans les données de produit autorisé (212).

17. Procédé (50) pour établir les données de produit autorisé (212) avec les caractéristique de tissu selon la revendication 9, dans lequel les données de produit autorisé (212) incluent en outre des données de premier point de vente, et les données de premier point de vente sont générées après que le tissu (30) ait été vendu pour la première fois dans un site de vente.

18. Procédé (50) pour établir les données de produit autorisé (212) avec les caractéristique de tissu selon la revendication 9, dans lequel le procédé (50) comprend en outre les étapes consistant à photographier une partie du tissu (50) avec la caractéristique anti-contrefaçon (32) pour générer une pluralité d'images de tissu (202) en attente de vérification sous différents angles, échantillonner la pluralité d'images de tissu (202) en attente de vérification pour générer une information de distribution de caractéristique optique d'image plane et une information de distribution de caractéristique optique d'image tridimensionnelle, et enregistrer l'information de distribution de caractéristique optique d'image plane et l'information de distribution de caractéristique optique d'image tridimensionnelle dans l'information de caractéristique anti-contrefaçon (214).

10

receiving at least one fabric partial image and
performing image analysis on the at least one fabric
partial image to determine a fabric body composed of
at least one first yarn loop and an anti-counterfeiting
feature composed of a plurality of second yarn loops,
and analyzing an image optical feature distribution
information from a part of the anti-counterfeiting
feature after the anti-counterfeiting feature is
determined,wherein at least two sub-yarns which form
the plurality of second yarn loops randomly forms
the image optical feature distribution information

~11

receiving a fabric serial number generated
by operation of an input device

~12

retrieving
the fabric serial
number or the image optical
feature distribution information
to find a authorized product data
correlated therewith, comparing the authorized
product data including an authorized product serial
number and an anti-counterfeiting feature
information of an authorized product
with the fabric serial number and
the image optical feature
distribution
information

13

matched

providing an
authorized product
prompt information

not
matched

providing a
counterfeit
prompt information

Fig. 1

Fig. 2

Fig.3

<u>10</u>

photographing a fabric waiting verifying by a camera
device to generate at least one fabric partial image — 14

receiving at least one fabric partial image and
performing image analysis on the at least one fabric
partial image to determine a fabric body composed of
at least one first yarn loop and an anti-counterfeiting
feature composed of a plurality of second yarn loops,
and analyzing an image optical feature distribution
information from a part of the anti-counterfeiting
feature after the anti-counterfeiting feature is
determined,wherein at least two sub-yarns which form — 11
the plurality of second yarn loops randomly forms
the image optical feature distribution information

receiving a fabric serial number generated
by operation of an input device — 12

retrieving
the fabric serial
number or the image optical
feature distribution information
to find a authorized product data
correlated therewith, comparing the authorized
product data including an authorized product serial
number and an anti-counterfeiting feature
information of an authorized product
with the fabric serial number and
the image optical feature
distribution
information

13

matched

providing an
authorized product
prompt information

not
matched

providing a
counterfeit
prompt information

Fig. 4

10

receiving at least one fabric partial image obtained
from a fabric waiting verified, and inducting
an anti-counterfeiting feature in the at least one
fabric partial image via an image similarity analysis,
and analyzing an image optical feature distribution
information from a part of the anti-counterfeiting
feature after the anti-counterfeiting feature is
determined, wherein at least two sub-yarns which form
the plurality of second yarn loops randomly forms
the image optical feature distribution information

—111

receiving a fabric serial number generated
by operation of an input device

—12

retrieving
the fabric serial
number or the image optical
feature distribution information
to find a authorized product data
correlated therewith, comparing the authorized
product data including an authorized product serial
number and an anti-counterfeiting feature
information of an authorized product
with the fabric serial number and
the image optical feature
distribution
information

13

matched

not
matched

providing an
authorized product
prompt information

providing a
counterfeit
prompt information

Fig. 5

<u>10</u>

```
┌─────────────────────────────────────────────────┐
│ receiving at least one fabric partial image and  │
│ performing image analysis on the at least one    │
│ fabric partial image to determine a fabric body  │
│ composed of at least one first yarn loop and an  │
│ anti-counterfeiting feature composed of a        │
│ plurality of second yarn loops, and analyzing an │   ~11
│ image optical feature distribution information   │
│ from a part of the anti-counterfeiting feature   │
│ after the anti-counterfeiting feature is         │
│ determined, wherein at least two sub-yarns which │
│ form the plurality of second yarn loops randomly │
│ forms the image optical feature distribution     │
│ information                                       │
└─────────────────────────────────────────────────┘
```

```
┌─────────────────────────────────────────────────┐
│      receiving a fabric serial number generated  │   ~12
│           by operation of an input device        │
└─────────────────────────────────────────────────┘
```

retrieving the fabric serial number or the image optical feature distribution information to find a authorized product data correlated therewith, obtaining at least two partial feature colour distribution information from the authorized product data, analyzing colour of the image optical feature distribution information to generate at least two feature colour distribution information which are the same as or similar to the at least two partial feature colour distribution information, respectively and comparing each feature colour distribution information with the partial feature colour distribution information correlated thereto

131

matched

```
┌──────────────────────┐   ┌──────────────────────┐  not
│ providing an         │   │ providing a          │  matched
│ authorized product   │   │ counterfeit          │
│ prompt information    │   │ prompt information    │
└──────────────────────┘   └──────────────────────┘
```

Fig. 6

Fig. 7

Fig. 8

Fig. 9

Fig. 10

201

Fig. 11

211

Fig. 12

219

Fig. 13

250

Fig. 14

Fig. 15

Fig. 16

202

Fig. 17

251

Fig. 18

217

Fig. 19

218

Fig. 20

Fig. 21

Fig. 22

Fig. 23

Fig. 24

252

Fig. 25

253

Fig. 26

<u>10</u>

```
┌─────────────────────────────────────────────┐
│ receiving a plurality of fabric partial images│
│ obtained from a fabric waiting verifying,     │
│ retrieving an image optical feature distribution│
│ information from an anti-counterfeiting feature│── ∼112
│ in the plurality of fabric partial images, and│
│ sampling a three-dimensional image optical feature│
│ distribution information to be verified for    │
│ comparing with the three-dimensional image optical│
│ feature distribution information              │
└─────────────────────────────────────────────┘
```

```
┌─────────────────────────────────────────────┐
│    receiving a fabric serial number generated │── ∼12
│    by operation of an input device            │
└─────────────────────────────────────────────┘
```

retrieving
the fabric serial
number or the image optical
feature distribution information
to find a authorized product data
correlated therewith, comparing the authorized
product data including an authorized product serial
number and an anti-counterfeiting feature
information of an authorized product
with the fabric serial number and
the image optical feature
distribution
information

13

matched
```
┌──────────────────┐
│ providing an     │
│ authorized product│
│ prompt information│
└──────────────────┘
```

not
matched
```
┌──────────────────┐
│ providing a      │
│ counterfeit      │
│ prompt information│
└──────────────────┘
```

Fig. 27

<u>50</u>

generating at least one fabric image to be analyzed by photographing a part of a fabric with an anti-counterfeiting feature, wherein the fabric comprises a fabric body composed of at least one first yarn loop and the anti-counterfeiting feature composed of a plurality of second yarn loops, and image optical features of the at least one first yarn loop is not close to image optical features of the plurality of second yarn loops ~51

performing image analysis on the second yarn loops in the at least one fabric image to generate an image optical distribution feature, wherein the image optical distribution feature is randomly generated by at least two sub-yarns and comprise image optical features not close to each other, respectively ~52

recording the image optical distribution feature as an anti-counterfeiting feature information of an authorized product, and storing the anti-counterfeiting feature information in correlation with an authorized product serial number to generate an authorized product data ~53

Fig. 28

50

```
┌─────────────────────────────────────┐
│  photographing a part of a fabric with │
│  an anti-counterfeiting feature to     │
│  generate a plurality of fabric images │ ──511
│  waiting verifying in different angles  │
└─────────────────────────────────────┘
                    │
┌─────────────────────────────────────┐
│  performing image analysis on the second │
│  yarn loops in the at least one fabric   │
│  image to generate an image optical      │
│  distribution feature, wherein the image │ ──52
│  optical distribution feature is randomly │
│  generated by at least two sub-yarns and  │
│  comprise image optical features not close │
│  to each other, respectively              │
└─────────────────────────────────────┘
                    │
┌─────────────────────────────────────┐
│  recording the image optical distribution │
│  feature as an anti-counterfeiting feature │
│  information of an authorized product, and │
│  storing the anti-counterfeiting feature   │ ──53
│  information in correlation with           │
│  an authorized product serial number       │
│  to generate an authorized product data     │
└─────────────────────────────────────┘
```

Fig. 29

generating at least one fabric image to be
analyzed by photographing a part of a fabric
with an anti-counterfeiting feature, wherein
the fabric comprises a fabric body composed
of at least one first yarn loop and the
anti-counterfeiting feature composed of a
plurality of second yarn loops, and image
optical features of the at least one first
yarn loop is not close to image optical
features of the plurality of second yarn loops

50

~51

performing image analysis on the second
yarn loops in the at least one fabric
image to generate an image optical
distribution feature, wherein the image
optical distribution feature is randomly
generated by at least two sub-yarns and
comprise image optical features not close
to each other, respectively

~52

recording the image optical distribution
feature as an anti-counterfeiting feature
information of an authorized product, and
storing the anti-counterfeiting feature
information in correlation with
an authorized product serial number
to generate an authorized product data

~53

analyzing colour of the image optical
distribution feature to generate at least
two partial feature colour distribution
information, and recording the at least
two partial feature colour distribution
information in the authorized product data

~531

Fig. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170204543 A1